# EUROPEAN PATENT SPECIFICATION

(11) **EP 3 371 013 B1**
(45) Date of publication and mention of the grant of the patent: **23.03.2022**
(21) Application number: 16793972.7
(22) Date of filing: 01.11.2016
(51) Int. Cl.: B60T 7/14, B60T 7/12

(54) **VEHICLE SAFETY BRAKING SYSTEM**
SICHERHEITSBREMSSYSTEM FÜR EIN FAHRZEUG
SYSTÈME DE FREINAGE DE SÉCURITÉ DE VÉHICULE

(30) Priority: 06.11.2015 GB 201519671
(43) Date of publication of application: 12.09.2018
(73) Proprietor: Vision Techniques (Group) Limited, Blackburn, Lancashire BB1 5SJ (GB)
(72) Inventor: ARMSTRONG, Nigel, Blackburn Lancashire BB1 5SJ (GB)
(74) Representative: Appleyard Lees IP LLP
(86) International application number: PCT/GB2016/053385
(87) International publication number: WO 2017/077282

(56) References cited:
- EP-A1- 0 059 531
- EP-A1- 1 946 983
- US-A1- 2003 221 922
- US-A1- 2011 039 658
- US-A1- 2014 172 240

## Description

### Field

The present invention relates to a device, system or method for preventing a vehicle moving without a driver present in said vehicle. The present invention also relates to a vehicle comprising such a device and/or system, for example a large commercial vehicle. In particular the invention relates to a device, system or method for automatically applying a braking system of a vehicle, for example a large commercial vehicle, to prevent said vehicle moving, for example on an inclined surface, without a driver present in said vehicle.

### Background

Known vehicles, for example motor vehicles, comprise a parking brake which is used to prevent the vehicle from moving when it has stopped, for example when parked. If the parking brake (also known as a hand brake) is not engaged, it is possible for a vehicle parked on an inclined surface, for example a road with a gradient greater than 0 %, to move under its own weight. In known vehicles, the parking brake has to be applied manually, for example by the driver, using a control, such as a lever, in order for the parking brake to engage and prevent a parked vehicle from moving under its own weight.

The document US2011/039658 discloses a method for operating a hold function for temporarily holding an operationally ready motor vehicle in a stationary state by use of a service brake. The service brake is actuated by electrohydraulic, electropneumatic or electromechanical mechanisms. The service brake can be activated within the framework of the hold function which uses the parking brake, when the speed of the vehicle is less than a preset first speed threshold, and the presence of the driver in the driver's seat is detected. The presence of the driver in the driver's seat is detected as a function of the signal of a flap sensor for detecting an opened or closed position of the flap, assigned to this flap sensor.

Large commercial vehicles, for example lorries (also know as trucks), light goods vehicles, heavy goods vehicles, waste collection vehicles (also known as dustbin lorries or garbage trucks), buses and coaches, are fitted with air brake systems (also known as compressed air brake systems). Such air brake systems comprise a spring which biases a disc, drum or pad brake to an engaged position. Air pressure in the air brake system has to be maintained at a certain level to hold the brake in a disengaged position against the bias of the spring. When such a large commercial vehicle is parked, the air brake system has to be intentionally engaged by a user, for example a driver, to prevent the vehicle moving when parked on an inclined surface.

### Summary Of The Invention

It is possible for a user, for example a driver, of a known vehicle with a parking brake to exit the vehicle without engaging the parking brake. If the vehicle is parked on an inclined surface, the vehicle may move under its own weight. This movement without the driver present in the vehicle, know as a "roll-away", may cause one or more of several types of accident. Firstly, the vehicle may become damaged if it hits an obstacle or runs off a road. Secondly, the vehicle may cause damage to property and/or serious injury to a person hit by the vehicle. Thirdly, the driver may attempt to re-enter the moving vehicle in order to regain control of the vehicle and in doing so suffer serious injury, for example if the driver falls under the wheels of the vehicle during the attempt to re-enter the vehicle.

These accidents may be more serious when the vehicle is a relatively large and relatively heavy vehicle, for example a large commercial vehicle of the types described above. Such vehicles when moving uncontrollably are liable to cause very serious damage to the vehicle itself and to property hit by the vehicle and/or cause very serious or fatal injury to persons hit by the vehicle or to a driver attempting to re-enter the vehicle. The risks of such accidents occurring should be minimised.

It is one aim of the present invention, amongst others, to provide a device, system, vehicle or method that addresses at least one disadvantage of the prior art, whether identified here or elsewhere, or to provide an alternative to existing devices, systems, vehicles or methods. For instance it is an aim of the invention to provide a device, system, vehicle or method which reduces the risk of accidents caused by vehicles moving without a driver present. In particular it is an aim of the present invention to provide a device, system, vehicle or method which prevents a vehicle moving without a driver present in said vehicle, in at least some circumstances, and therefore prevents serious accidents.

According to aspects of the present invention, there is provided a device, system, vehicle or method as set forth in the appended claims. Other features of the invention will be apparent from the dependent claims, and the description which follows.

According to a first aspect of the present invention, there is provided a device for preventing a vehicle moving without a driver present in said vehicle, the device comprising a control module and a brake module;
wherein the control module is adapted to:
   receive a signal from a first driver sensor in said vehicle to detect a first condition indicative of said driver leaving said vehicle;
   receive a signal from a brake sensor (308) in said vehicle to detect an engaged or disengaged state of a parking brake system in said vehicle;
   receive a signal from a speed sensor (202) to detect the speed of said vehicle;
and wherein the control module is adapted to send an activating signal to the brake module when the control module:
   detects said first condition indicative of said driver leaving said vehicle;
   detects that the braking system is disengaged; and
   detects a vehicle speed of less than 10 km/h;
wherein the brake module is adapted to engage a braking system in said vehicle when the brake module receives said activating signal;
wherein the device comprises a reset button or switch to restore the device to its previous condition after an emergency application of said braking system, and wherein the reset button or switch deactivates the brake module so the brake module no longer engages said braking system.

By engaging a braking system in said vehicle we mean that the braking system is put into a state which prevents the vehicle from moving, for example if parked on an inclined surface.

The inventors have found that the device when fitted to a vehicle, for example a large commercial vehicle, can reduce the risk of accidents caused by the vehicle moving without a driver present, for example rolling down an inclined surface, by activating a braking system under certain circumstances. For example when a driver exits the vehicle, the driver triggers the first driver sensor causing the control module to receive the signal from the first driver sensor and then send the activating signal to the brake module which engages a braking system to prevent the vehicle moving.

Without the device fitted, a driver can exit the vehicle without engaging a suitable braking system, for example a parking brake, and therefore risk the vehicle moving under its own weight and causing one or more of the accidents discussed above.

Therefore the device may increase the safety of a vehicle fitted with the device. The device when fitted to a vehicle may reduce the number of accidents caused by drivers neglecting to engage a braking system before exiting the vehicle. The device when fitted to a vehicle may prevent accidents caused by drivers neglecting to engage a braking system before exiting the vehicle.

The device may receive a signal from any known sensor which can detect a condition indicative of a driver leaving said vehicle. Suitable conditions indicative of a driver leaving said vehicle may include the opening of a door of said vehicle or the lifting of a driver's weight from a driver's seat in said vehicle.

Said first sensor may be incorporated into said vehicle, for example during manufacture of said vehicle, for example as part of said vehicle's electronic control system.

By detecting conditions indicative of a driver leaving the vehicle we mean to include detecting the presence of a driver in said vehicle and/or detecting the absence of a driver from said vehicle and/or detecting an act which may be performed during a driver's exit from said vehicle.

Examples of detecting the presence of a driver in said vehicle may include any one or more of detecting the weight of a driver on a driver's seat; detecting a driver's body heat; detecting a driver's body mass present in said vehicle; detecting a driver's movement in said vehicle; and detecting a driver's touch on a steering wheel of said vehicle.

Examples of detecting the absence of a driver from said vehicle may include any one or more of detecting the absence of a driver's weight on a driver's seat; detecting the absence of a driver's body heat in said vehicle; detecting the absence of a driver's body mass in said vehicle; detecting the absence of a driver's movement in said vehicle; and detecting the absence of a driver's touch on a steering wheel of said vehicle.

Examples of detecting an act which may be performed during a driver's exit from said vehicle may include detecting the opening of a door of said vehicle, for example a driver's side door; detecting the closing of a door of said vehicle, for example a driver's side door; detecting the removal of an ignition key from an ignition lock; detecting a change in the weight on a driver's seat; and detecting a driver's weight on a step below a door of said vehicle, for example a driver's side door.

Sensors which can detect such conditions indicative of a driver leaving the vehicle are known in the art.

Vehicles in which the device is suitable for use include motor vehicles. Suitably said vehicle is a motor vehicle. Said vehicle may be an automobile. Said vehicle may be large commercial vehicle, for example a lorry, a light goods vehicle, a heavy goods vehicle, a waste collection vehicle, a bus or a coach. Suitably said vehicle is a lorry. Suitably said vehicle is a waste collection vehicle.

The seriousness of accidents caused by drivers neglecting to engage a braking system before exiting a vehicle is increased by the size and/or weight of the vehicle. Therefore the device of this first aspect is particularly advantageous when used in a large commercial vehicle, in particular when used in a lorry or a waste collection vehicle.

Suitably said first condition indicative of said driver leaving said vehicle is the absence of said driver from a driver's seat in said vehicle.

The inventors have found that in circumstances wherein a driver exits a vehicle without engaging a suitable braking system, the exiting of the driver from the vehicle can be determined by the removal of the driver's weight from a driver's seat. Therefore the first condition indicative of the driver leaving the vehicle being the absence of the driver from a driver's seat in the vehicle allows the device to prevent the vehicle moving without a driver present in the vehicle in most such circumstances, suitably all such circumstances.

A pressure sensor may be used to detect the removal of said driver's weight from said driver's seat and so detect the absence of said driver from said driver's seat. Suitable pressure sensors are known in the art. A suitable pressure sensor may be incorporated into said vehicle, for example during the manufacture of said vehicle, for example as part of said vehicle's electronic control system. Alternatively, a suitable pressure sensor may be retro-fitted to a vehicle, for example between a seat base and a seat cushion.

Suitably said first condition indicative of said driver leaving said vehicle is opening of a door of said vehicle.

The inventors have found that in circumstances wherein a driver exits a vehicle without engaging a suitable braking system, the exiting of the driver from the vehicle can be detected by the opening of a door of the vehicle. Therefore the first condition indicative of the driver leaving said vehicle being the opening of a door of the vehicle allows the device to prevent the vehicle moving without a driver present in the vehicle in most such circumstances, suitably all such circumstances.

A pressure, contact or proximity sensor may be used to detect the opening of a door of said vehicle. Suitable pressure, contact or proximity sensors are known in the art. A suitable pressure, contact or proximity sensor may be incorporated into said vehicle, for example during manufacture of said vehicle, for example as part of said vehicle's electronic control system. Alternatively, a suitable pressure, contact or proximity sensor may be retro-fitted to a vehicle, for example in a door or door frame of the vehicle.

Suitably said first condition indicative of said driver leaving said vehicle is opening of any one of the doors of said vehicle. Suitably said first condition indicative of said driver leaving said vehicle is opening of a front door of said vehicle. Suitably said first condition indicative of said driver leaving said vehicle is opening of a driver's side door of said vehicle. Suitably said first condition indicative of said driver leaving said vehicle is opening of any door in a vehicle, for example when said vehicle comprises a cab wherein said driver can access more than one door to exit the vehicle.

Suitably the control module is adapted to receive a signal from a second driver sensor in said vehicle to detect a second condition indicative of said driver leaving said vehicle; and adapted to send said activating signal to the brake module when the control module detects said first and/or second conditions indicative of said driver leaving said vehicle.

The inventors have found that using a second condition indicative of a driver leaving the vehicle can make the device either more sensitive to detecting a driver leaving the vehicle or less likely to engage a braking system unnecessarily.

Suitably the control module is adapted to send said activating signal to the brake module only when the control module detects said first and second conditions indicative of said driver leaving said vehicle.

The inventors have found that using a second condition indicative of a driver leaving the vehicle in this way allows the device to only engage a braking system when it is certain that a driver has left the vehicle, requiring two signals from two separate driver sensors to detect conditions indicative of a driver leaving the vehicle. This reduces the risk of the device unnecessarily engaging the braking system.

The device may be electronically configured to require said signals from a first driver sensor and a second driver sensor before sending an activating signal to the brake module, for example using an AND logic gate. Suitable electronic configurations are known in the art.

Alternatively the control module may be adapted to send said activating signal to the brake module when the control module detects either of said first and second conditions indicative of said driver leaving said vehicle.

The inventors have found that using a second condition indicative of a driver leaving the vehicle in this way allows the device to produce a more sensitive detection of a driver leaving the vehicle, for example if the act of a driver leaving the vehicle only triggers one of the first or second driver sensors.

The device may be electronically configured to require said signals from either a first driver sensor or a second driver sensor before sending an activating signal to the brake module, for example using an OR logic gate. Suitable electronic configurations are known in the art.

Said second sensor may be incorporated into said vehicle, for example during manufacture of said vehicle, for example as part of said vehicle's electronic control system.

The control module may be adapted to receive a signal from one or more further driver sensors in said vehicle to detect one or more further conditions indicative of said driver leaving said vehicle; and be adapted to send said activating signal to the brake module when the control module detects said first and/or second and/or any further conditions indicative of said driver leaving said vehicle.

The control module is adapted to receive a signal from a brake sensor in said vehicle to detect an engaged or disengaged state of a braking system in said vehicle; and adapted to send said activating signal to the brake module when the control module detects said first condition indicative of said driver leaving said vehicle and detects that the braking system is disengaged.

By a braking system being disengaged we mean that the braking system is not in a state which prevents the vehicle from moving, for example if parked on an inclined surface.

By a braking system being engaged we mean that the braking system is in a state which prevents the vehicle from moving, for example if parked on an inclined surface.

The inventors have found that arranging the device so that the brake module can only be activated when a brake sensor detects that a braking system is disengaged advantageously restricts the operation of the device to circumstances wherein the engagement of a braking system by the brake module is absolutely necessary and so avoiding unnecessary activation of the device.

The device is electronically configured to require said signals from both said first driver sensor and said brake sensor; or to require said signals from either said first or second driver sensors and a brake sensor; or to require said signals from both said first and second driver sensors and said brake sensor, before sending an activating signal to the brake module, for example using AND and OR logic gates. Suitable electronic configurations are known in the art.

The brake sensor may be a brake release lever sensor, for example an electromechanical switch.

Suitable types of brake release levers and brake release lever sensors are known in the art.

Said brake sensor may be incorporated into said vehicle, for example during manufacture of said vehicle, for example as part of said vehicle's electronic control system. Suitable brake sensors are known in the art.

The braking system which the control module is adapted to detect the engaged or disengaged state of is a parking brake system.

A parking brake is also known in the art as a hand brake.

The parking brake is usually the braking system which a driver should engage before leaving the vehicle. Therefore the device can effectively detect when a vehicle is at risk of moving without a driver present if the device detects the engaged or disengaged state of the parking brake system.

Said brake sensor may be a parking brake sensor. The control module may be adapted to receive a signal from a parking brake sensor to detect the engaged or disengaged state of the parking brake system. Said vehicle may comprise a parking brake sensor. Said parking brake sensor may be incorporated into said vehicle, for example during manufacture of said vehicle, for example as part of said vehicle's electronic control system. Suitable parking brake sensors are known in the art.

Suitably the braking system which the control module is adapted to detect the engaged or disengaged state of is an air brake system.

Air brakes are commonly used in large commercial vehicles which are particularly at risk of causing serious accidents if such vehicles move without a driver present, for example the parking brake of such vehicles is commonly an air brake system.

The braking system which the brake module is adapted to engage is a parking brake, suitably an air brake system.

The parking brake is usually the braking system which a driver should engage before leaving the vehicle. Therefore the device can effectively prevent the vehicle from moving by engaging the parking brake if the device detects the condition or conditions indicative of the driver leaving the vehicle and in doing so correct the mistake made by the driver who should have engaged the parking brake before leaving the vehicle. This arrangement removes the need for a supplementary braking system to be fitted to the vehicle and arranged in communication with the device in order for the device to function as intended to prevent the vehicle moving without a driver present.

In order for the brake module to engage said parking brake, the brake module may be fitted to the parking brake.

Suitably the braking system which the brake module is adapted to engage is the same braking system which the control module is adapted to detect the engaged or disengaged state of.

This arrangement may provide a more simple and robust system as only one braking system in the vehicle has to be monitored and engaged by the device.

The braking system which the brake module is adapted to engage is a parking brake and the braking system which the control module is adapted to detect the engaged or disengaged state of is the same parking brake.

Suitably the braking system which the brake module is adapted to engage is an air brake system; and wherein the brake module is adapted to engage the air brake system by depressurising the air brake system.

By engage the air brake system by depressurising the air brake system we mean that the brake module can be activated by the control module to reduce the air pressure in the air brake system sufficiently to allow the air brake to move to a state which prevents the vehicle from moving, for example through the action of a spring which biases a brake pad towards contact with a brake drum, the brake pad previously being held in a disengaged state against the bias of the spring by the high pressure in the air brake system.

The inventors have found that the brake module, when activated, depressurising the air brake system provides a rapid engagement of the air brake system to prevent the vehicle from moving.

The brake module may comprise a valve for releasing air pressure from the air brake system when the brake module is activated, for example a dump valve (also known as a blow-off valve) arranged in a pneumatic circuit of the air brake system before an air brake control valve. Suitable valves are known in the art.

Suitably the braking system which the control module is adapted to detect the engaged or disengaged state of and which the brake module is adapted to engage is an air brake system; wherein the air brake system is a parking brake.

Suitably the control module is adapted to receive a signal from a gearbox sensor in said vehicle to detect a neutral or drive state of said gearbox; and wherein the control module is adapted to send said activating signal to the brake module when the control module detects that said gearbox is in neutral state.

In embodiments wherein the control module is adapted to receive a signal from a gearbox sensor in said vehicle to detect a neutral or drive state of said gearbox, suitably the control module is adapted to send said activating signal to the brake module when the control module detects that said gearbox is in neutral state only when an engine of said vehicle is on. Suitably when the engine is off, the control module is adapted to send said activating signal to the brake module regardless of whether said signal from a gearbox sensor in said vehicle to detect a neutral or drive state of said gearbox is received.

By neutral state we mean the gearbox is not in a driving gear, in other words when the engine is not engaged with the vehicle's transmission and movement of the vehicle through the action of the engine is not possible.

By drive state we mean the gearbox is in a driving gear, in other words the engine is engaged with the vehicle's transmission and movement of the vehicle through the action of the engine is possible.

The inventors have found that when the control module is adapted to send said activating signal to the brake module only when the control module detects that said gearbox is in neutral state, this has the advantage that the braking system is only engaged when absolutely necessary. The majority of accidents caused by vehicles moving without a driver present occur when the vehicle's gearbox is in neutral state.

Said gearbox sensor may be incorporated into said vehicle, for example during manufacture of said vehicle, for example as part of said vehicle's electronic control system. Suitable gearbox sensors are known in the art.

Suitably the control module is adapted to send a signal to an alarm module to produce an audible warning when the brake module engages the braking system in said vehicle. Suitably the device comprises an alarm module.

Alternatively the alarm module may be a separate entity which the device is arranged in communication with.

The alarm module suitably comprises a speaker.

Suitably said audible warning involves a positive confirmation that said braking system has been engaged to prevent said vehicle moving without said driver present, for example an audible statement such as "Please apply park brake and press reset".

By audible warning we mean a sound emitted by the alarm module which is sufficiently loud to be heard by a driver outside the vehicle, suitably whilst the vehicle's engine is running.

The inventors have found that arranging the device to produce an audible warning when the brake module engages the braking system in said vehicle provides an additional improvement in safety as the driver is alerted to the mistake and knows that the vehicle has successfully engaged the braking system to prevent the vehicle moving so the driver does not then take potentially dangerous emergency action.

Said alarm module or speaker may be incorporated into said vehicle, for example during manufacture of said vehicle, for example as part of said vehicle's electronic control system and/or reversing warning system. Suitable alarm modules or speakers for use with the device are known in the art.

The device comprises a reset button or switch to restore the device to its previous condition after an emergency application of said braking system, for use by said driver once said driver has been alerted to the emergency application of said braking system and has applied a parking brake to said vehicle. The reset button or switch deactivates the brake module so the brake module no longer engages said braking system.

Therefore the device is adapted to require manual input to restore the device to its previous condition after an emergency application of said braking system (a condition where the device is active and able to engage a braking system in said vehicle when the brake module receives said activating signal). For example, said manual input is required to activate a reset button or switch in order to restore the device to its previous condition after an emergency application of said braking system.

In some embodiments, said manual input may involve the user moving the gearbox out of a neutral state and into a drive or reverse state.

Suitably the device cannot be restored to its previous condition after an emergency application of said braking system without said manual input. Said manual input may be provided by a driver or other vehicle operator. Suitably said braking system cannot be deactivated unless said manual input is provided.

Suitably the device comprises a reset module adapted to send a reset signal from the reset module to the control module when the reset module is activated. Suitably the reset module is activated by said manual input, for example to a reset button or switch. Suitably the control module is adapted to send a de-activating signal to the brake module when the control module detects said reset signal. Suitably the brake module is adapted to disengage said braking system in said vehicle when the brake module receives said de-activating signal from the control module.

In some embodiments, the control module is adapted to send a de-activating signal to the brake module only when the control module detects said reset signal.

In some embodiments, the control module is adapted to send a de-activating signal to the brake module either when the control module detects said reset signal or when the gearbox of the vehicle is no longer in a neutral state (i.e. the gearbox is in a drive or reverse state).

Suitably the control module is adapted to restore the device to a condition where the device is active and able to engage a braking system in said vehicle when the brake module receives said activating signal, when said reset signal is received from the reset module.

In some embodiments, the control module is adapted to restore the device to a condition where the device is active and able to engage a braking system in said vehicle when the brake module receives said activating signal, only when said reset signal is received from the reset module.

In some embodiments, the control module is adapted to restore the device to a condition where the device is active and able to engage a braking system in said vehicle when the brake module receives said activating signal, either when said reset signal is received from the reset module or when the gearbox of the vehicle is no longer in a neutral state (i.e. the gearbox is in a drive or reverse state).

Suitably the reset module is adapted to require a manual input in order to send said reset signal to the control module. For example, the reset module may comprises a button or switch which requires manual input in order to activate the button or switch and send said reset signal to the control module. Said manual input may be provided by a driver or other vehicle operator. In some embodiments, the device can only be reset by said manual input to the reset module.

Suitably the control module is adapted to only send a de-activating signal to the brake module and/or restore the device to a condition where the device is active and able to engage a braking system in said vehicle when the brake module receives said activating signal, when a parking brake is applied, for example using the vehicle's standard parking brake controls. Therefore the device may only be reset when a user has applied the vehicle's parking brake controls, so that without the operation of the device the parking brake would be applied, and when the user provides the required manual input to the reset module. The user can then resume normal operation of the vehicle by releasing the parking brake using the standard parking brake controls of the vehicle and driving the vehicle in the normal way.

In some embodiments, the control module is adapted to send a de-activating signal to the brake module and/or restore the device to a condition where the device is active and able to engage a braking system in said vehicle when the brake module receives said activating signal, either:
a) when a parking brake is applied, for example using the vehicle's standard parking brake controls, and a user provides a manual input to the reset module; or
b) when the gearbox of the vehicle is no longer in a neutral state (i.e. the gearbox is in a drive or reverse state).

Therefore the device may be reset either when a user has applied the vehicle's parking brake controls, so that without the operation of the device the parking brake would be applied, and when the user provides the required manual input to the reset module; or when a user has placed the vehicle's gearbox into a drive or reverse state. The user can then resume normal operation of the vehicle.

Suitably the device is adapted to communicate with an electronic control system in said vehicle to receive said signals from said first driver sensor, optionally said brake sensor, optionally said second driver sensor and optionally said gearbox sensor connected to said electronic control system.

By electronic control system we mean the electrical vehicle management system including any sensors which may be fitted to the vehicle, for example a pressure or weight sensor on a driver's seat, a sensor for detecting the opening of a door, a gearbox sensor and/or a brake sensor.

The inventors have found the device being adapted to communicate with an electronic control system in said vehicle to receive said signals facilitates the fitting of the device to an existing vehicle with said sensors already incorporated into the vehicle's electronic control system. Therefore additional sensors do not need to be fitted to such a vehicle for the device to perform its function of preventing the vehicle moving without a driver present in the vehicle. This means the device and its fitting can be provided in a more cost effective manner than would otherwise be possible.

Suitably the device is adapted to communicate with an electronic control system in said vehicle to receive said signals by using a controller area network (also known as a CAN bus) protocol. Such controller area network protocols and associated hardware and/or software required to allow such communication are known in the art.

Suitably the device comprises at least one connection port to facilitate communication of the device with said electronic control system in said vehicle. Suitably the device comprises a housing. Suitably the housing comprises the at least one connection port and the control module. Suitably the housing is adapted to allow placement of the housing in a vehicle, suitably on or under a dashboard in said vehicle, for example the housing suitably has a size and shape to allow such placement without obstructing a driver.

Suitably the brake module is separate from the housing and arranged in communication with the control module through the housing.

Suitably the device may function to prevent a vehicle moving without a driver present in said vehicle either whilst said vehicle's engine is running or whilst said vehicle's engine is not running.

Said braking system may be an air brake system comprising a brake release module, for example a brake release lever.

In embodiments wherein said braking system is an air brake system comprising a brake release module, the brake sensor may be an air brake sensor system. The air brake sensor system may comprise a first air brake pressure sensor, for example an electromechanical switch, placed in the pneumatic circuit before the brake release lever (i.e. in the supply line). The air brake sensor system may comprise a second air brake pressure sensor, for example an electromechanical switch, placed in the pneumatic circuit after the brake release lever and before the brake module.

Suitably the air brake sensor system comprises a brake release lever, a first air brake pressure sensor placed in the pneumatic circuit before the brake release lever and a second air brake pressure sensor placed in the pneumatic circuit after the brake release lever and before the brake module.

Suitably the device is adapted to send said activating signal to the brake module when said first air brake pressure sensor and said second air brake pressure sensor both detect high pressure in the air brake system, for example an air pressure of above 1.0 bar or above 1.5 bar or above 2.0 bar. This arrangement provides a positive determination that the air brake system is sufficiently pressurised for the air brake to be disengaged, and therefore in a state which allows said vehicle to move, so that the device only activates the brake module when it is necessary.

The device may additionally or alternatively be adapted to send said activating signal to the brake module when said first air brake pressure sensor detects low pressure, for example less than 3.5 bar, or less than 3.0 bar, or less than 2.5 bar; and when said second air brake pressure sensor detects an increase in air pressure, for example above 1.0 bar or above 1.5 bar or above 2.0 bar; suitably only when the engine is on (running); suitably only when said vehicle is in a neutral gear state, suitably only when the speed of the vehicle is less than a set value, suitably less than 10 km/h, suitably less than 5 km/h.

Suitably the device overrides the requirement for a signal from said first driver sensor in these circumstances, therefore the activating signal may be sent to the brake module whenever said first air brake pressure sensor detects low pressure; and when said second air brake pressure sensor detects an increase in air pressure; suitably only when the engine is on (running).

In embodiments wherein said braking system is an air brake system comprising a pneumatic circuit, a brake release module and air brake sensor system;
said air brake sensor system comprising a first air brake pressure sensor, placed in said pneumatic circuit before said brake release module; and a second air brake pressure sensor, placed in said pneumatic circuit after said brake release module and before the brake module;
suitably the control module is also adapted to:
   receive a signal from said air brake sensor system to detect an engaged or disengaged state of a braking system in said vehicle;
   receive a signal from a gearbox sensor in said vehicle to detect a neutral or drive state of said gearbox;
   receive a signal from an engine sensor to detect an on or off state of said engine;
   send an activating signal to the brake module when the control module detects that said engine is on, that said gearbox is in neutral state, that said first air brake pressure sensor detects low pressure and that said second air brake pressure sensor detects an increase in air pressure signifying that the braking system is disengaged;
   wherein the brake module is adapted to engage a braking system in said vehicle when the brake module receives said activating signal.

The control module is adapted to receive a signal from a speed sensor to detect the speed of said vehicle and to send said activating signal to the brake module when the control module detects a vehicle speed of less than 10 km/h, for example less than 5 km/h.

Said speed sensor may be incorporated into said vehicle, for example during manufacture of said vehicle, for example as part of said vehicle's electronic control system. Suitable speed sensors are known in the art.

Suitably the device is adapted to communicate with an electronic control system in said vehicle to receive said signals from said speed sensor connected to said electronic control system; suitably by using a CAN bus protocol.

Suitably said engine sensor is incorporated into said vehicle, for example during manufacture of said vehicle, for example as part of said vehicle's electronic control system. Suitable engine sensors are known in the art.

Suitably the device is adapted to communicate with an electronic control system in said vehicle to receive said signals from said engine sensor connected to said electronic control system; suitably by using a CAN bus protocol.

A vehicle having an air brake system may initially have low pressure in the air brake system before the engine of the vehicle is switched on, the air brake system would therefore be engaged. Switching on the engine of the vehicle may then cause the pressure in the air brake system to increase which would disengage the air brake system if the air brake system is set to off (a disengaged state), for example through a brake release lever. It is therefore possible for a driver of such a vehicle to switch the engine on, for example to warm the engine before driving off, and leave the vehicle or attend to other matters within the vehicle without the air brake system being set to on (an engaged state), the driver perhaps believing that the air brake system is properly engaged. The subsequent build up of pressure in the air brake system may then disengage the air brake system and allow the vehicle to move accidentally, potentially causing the accidents referred to earlier. The arrangement of the device described above has the advantage that in such circumstances the uncontrolled and accidental movement of the vehicle is prevented by the device sending the activating signal to the brake module to engage the braking system when the air brake is set to off and a rise in air pressure in the pneumatic circuit is detected.

Adapting the control module to only send an activating signal to the brake module when the control module detects that said braking system is disengaged, that said gearbox is in neutral state, that said engine is on and only when the speed of the vehicle is less than 10 km/h, suitably less than 5 km/h, prevents the device operating to engage the braking system when the vehicle's gearbox is put into neutral during normal driving of the vehicle.

The device may comprise a warning light adapted to illuminate when the control module detects that said engine is on, that said gearbox is in neutral state and that said first air brake pressure sensor detects low pressure. Such a warning light may alert a driver to the potentially dangerous condition of the vehicle which could lead to the vehicle accidentally moving if an increase in air pressure in the air brake system occurs subsequently. The driver may then be able to take appropriate action and engage the air brake system before the device intervenes to engage the air brake.

Suitable types of air brake pressure sensors are known in the art.

According to a second aspect of the present invention, there is provided a system for preventing a vehicle moving without a driver present in said vehicle, the system comprising:
a device according to the first aspect; and
at least a first driver sensor adapted to detect a first condition indicative of said driver leaving said vehicle.

The suitable features and advantages of the device comprised in the system of this second aspect are as described above in relation to the first aspect.

The system may comprise any one or more of the sensors described above in relation to the first aspect. For example the system of this second aspect may comprise a brake sensor, a second driver sensor, one or more further driver sensors, a gearbox sensor, an engine sensor and/or a speed sensor as described in relation to the first aspect.

The system comprises a first driver sensor, optionally a second driver sensor, optionally one or more further driver sensors, optionally a brake sensor, optionally a gearbox sensor, optionally an engine sensor and/or optionally a speed sensor, one or more of which are incorporated into said vehicle, for example during manufacture of said vehicle, for example as part of said vehicle's electronic control system.

The system comprises a first driver sensor, optionally a second driver sensor, optionally one or more further driver sensors, optionally a brake sensor, optionally a gearbox sensor, optionally an engine sensor and/or optionally a speed sensor, which are all, if present, incorporated into said vehicle, for example during the manufacture of said vehicle, for example as part of said vehicle's electronic control system. Therefore the system can be formed by fitting the device to an existing vehicle with the sensors already incorporated into the vehicle's electronic control system, as described in relation to the first aspect. Therefore additional sensors do not need to be fitted to such a vehicle for the device to perform its function of preventing the vehicle moving without a driver present in the vehicle. This means the device and its fitting can be provided in a more cost effective manner than would otherwise be possible.

Alternatively the system may comprise a first driver sensor, optionally a second driver sensor, optionally one or more further driver sensors, optionally a brake sensor, optionally a gearbox sensor, optionally an engine sensor and/or optionally a speed sensor, one or more of which are not incorporated into said vehicle during the manufacture of said vehicle. The system may therefore be fitted to a vehicle which does not have one or more of said sensors already incorporated into the vehicle's electronic control system. This means the device and its fitting can be provided in vehicles with less sophisticated electronic management systems which lack said sensors, for example older vehicles.

Suitably the system comprises a brake sensor adapted to detect an engaged or disengaged state of a braking system in said vehicle.

Suitably the system comprises a gearbox sensor adapted to detect a neutral or drive state of said gearbox.

Suitably the system comprises a second driver sensor adapted to detect a second condition indicative of said driver leaving said vehicle.

Suitably the system comprises a driver's seat sensor adapted to detect the absence of the driver from a driver's seat in the vehicle;
Suitably the system comprises a driver's side door sensor adapted to detect opening of a driver's door of the vehicle.

Suitably the system comprises an engine sensor to detect an on or off state of said vehicle's engine.

Suitably the system comprises a speed sensor to detect the speed of said vehicle.

Suitable sensors and methods of connecting said sensors to the device in the system are known in the art.

According to a third aspect of the present invention, there is provided a vehicle comprising a system according to the second aspect.

The suitable features and advantages of the vehicle of this third aspect are as described above in relation to the first and second aspects.

Suitably the vehicle is a large commercial vehicle.

Suitably the vehicle comprises a first driver sensor, optionally a second driver sensor, optionally one or more further driver sensors, optionally a brake sensor, optionally a gearbox sensor, optionally an engine sensor and/or optionally a speed sensor, one or more of which are incorporated into said vehicle, for example during manufacture of said vehicle, for example as part of said vehicle's electronic control system.

Suitably the vehicle comprises a first driver sensor, optionally a second driver sensor, optionally one or more further driver sensors, optionally a brake sensor, optionally a gearbox sensor, optionally an engine sensor and/or optionally a speed sensor, one or more of which are not incorporated into said vehicle during the manufacture of said vehicle.

According to a fourth aspect of the present invention, there is provided a method of preventing a vehicle moving when a driver is absent from the vehicle using a device according to the first aspect, the method comprising the steps of:
a) detecting the absence of the driver in the vehicle using at least a first driver sensor;
   a2) detecting an engaged or disengaged state of a parking brake system in the vehicle using a brake sensor;
   a3) detecting the speed of the vehicle using a speed sensor; and
b) engaging a braking system if the at least one driver sensor determines that the driver is absent from the vehicle; the brake sensor determines that the parking brake system is not engaged; and the speed sensor determines that the vehicle speed is less than 10 km/h.

Suitably the steps of the method are carried out in the order steps a), a2) and a3) followed by step b).

The inventors have found that performing the method in relation to a vehicle, for example a large commercial vehicle, can reduce the risk of accidents caused by the vehicle moving without a driver present, for example rolling down an inclined surface, by activating a braking system under certain circumstances. For example, when a driver exits the vehicle the driver triggers the first driver sensor and causes the braking system to be engaged to prevent the vehicle moving.

In the absence of the method, a driver can exit the vehicle without engaging a suitable braking system, for example a parking brake, and therefore risk the vehicle moving under its own weight and causing one or more of the accidents discussed above.

Therefore performing the method may improve the safety of a vehicle. The method when performed on or by a vehicle may reduce the number of accidents caused by drivers neglecting to engage a braking system before exiting the vehicle. The method when performed on or by a vehicle may prevent accidents caused by drivers neglecting to engage a braking system before exiting the vehicle.

The method may be performed by or using a device according to the first aspect and/ or a system according to the second aspect and/or a vehicle according to the third aspect.

The method involves a step a2) before step b) of detecting an engaged or disengaged state of a braking system in the vehicle using a brake sensor. Step b) involves activating the braking system if the at least one driver sensor determines that the driver is absent from the vehicle and the brake sensor determines that the braking system is not engaged.

The method may involve a step a4) before step b) of detecting the neutral or drive state of a gearbox using a gearbox sensor. Step b) may involve activating the braking system if the at least one driver sensor determines that the driver is absent from the vehicle and/or the gearbox sensor detects that said gearbox is in neutral state.

The method may involve a step a5) before step b) of detecting the absence of the driver in the vehicle using a second driver sensor. Step b) may involve activating the braking system if the at least one driver sensor determines that the driver is absent from the vehicle and/or the second driver sensor determines that the driver is absent from the vehicle.

The method may involve a step a6) before step b) of detecting the absence of the driver in the vehicle using a first, second and at least one further driver sensor. Step b) may involve activating the braking system if the first and/or second and/or at the least one further driver sensor determines that the driver is absent from the vehicle.

The suitable features and advantages of the sensors and their use in the method of this fourth aspect are as described in relation to the first, second and third aspects.

In some embodiments the method comprises steps a4) and a5).

Suitably the method comprises a step c), performed after and/or simultaneously with step b), of producing an audible warning when step b) is carried out.

According to some embodiments of the device of the first aspect, the device may also comprise the following features:
wherein the control module is adapted to:
receive a signal from a first driver sensor in said vehicle to detect a first condition indicative of said driver leaving said vehicle;
receive a signal from a brake sensor in said vehicle to detect an engaged or disengaged state of a braking system in said vehicle;
receive a signal from a second driver sensor in said vehicle to detect a second condition indicative of said driver leaving said vehicle;
receive a signal from a gearbox sensor in said vehicle to detect a neutral or drive state of said gearbox;
receive a signal from an engine sensor to detect an on or off state of said engine; and
send an activating signal to the brake module when the control module detects either:
   a) that said engine is off, that said braking system is disengaged and detects said first and second conditions indicative of said driver leaving said vehicle; or
   b) that said engine is on, that said gearbox is in neutral state, that said braking system is disengaged and detects said first and second conditions indicative of said driver leaving said vehicle;
   wherein the brake module is adapted to engage a braking system in said vehicle when the brake module receives said activating signal.

According to some embodiments of the device of the first aspect, the device may also comprise the following features:
said vehicle comprising an air brake system;
the device comprising a control module and a brake module;
said air brake system comprising a pneumatic circuit; a brake release module; and an air brake sensor system;
said air brake sensor system comprising a first air brake pressure sensor, placed in said pneumatic circuit before said brake release module; and a second air brake pressure sensor, placed in said pneumatic circuit after said brake release module and before the brake module;
wherein the control module is adapted to:
   receive a signal from a first driver sensor in said vehicle to detect a first condition indicative of said driver leaving said vehicle;
   receive a signal from said air brake sensor system to detect an engaged or disengaged state of a braking system in said vehicle;
   receive a signal from a gearbox sensor in said vehicle to detect a neutral or drive state of said gearbox;
   receive a signal from an engine sensor to detect an on or off state of said engine;
   send an activating signal to the brake module when the control module detects either:
      a) that said engine is off, that said first air brake pressure sensor and said second air brake pressure sensor detect high air pressure signifying that the braking system is disengaged and detects said first condition indicative of said driver leaving said vehicle; or
      b) that said engine is on, that said gearbox is in neutral state, that said first air brake pressure sensor and said second air brake pressure sensor detect high air pressure signifying that the braking system is disengaged and detects said first condition indicative of said driver leaving said vehicle; or
      c) that said engine is on, that said gearbox is in neutral state, that said first air brake pressure sensor detects low pressure and that said second air brake pressure sensor detects an increase in air pressure signifying that the braking system is disengaged;
wherein the brake module is adapted to engage a braking system in said vehicle when the brake module receives said activating signal.

Suitably the condition of said first air brake pressure sensor detecting low air pressure is said first air brake pressure sensor detecting an air pressure of less than 3.5 bar, suitably less than 3.0 bar, suitably less than 2.5 bar.

Suitably the condition of said second air brake pressure sensor detecting an increase in air pressure is said second air brake pressure sensor detecting an increase in air pressure above 1.5 bar, suitably above 2.0 bar, suitably above 3.0 bar.

Suitably the control module is adapted to receive a signal from a speed sensor to detect the speed of said vehicle and to send said activating signal to the brake module when the control module detects a vehicle speed of less than 10 km/h, for example less than 5 km/h.

According to some embodiments of the method of the fourth aspect, the method may also comprise the following features:
said vehicle comprising an air brake system;
said air brake system comprising a pneumatic circuit; a brake release module; and an air brake sensor system;
said air brake sensor system comprising a first air brake pressure sensor, placed in said pneumatic circuit before said brake release module; and a second air brake pressure sensor, placed in said pneumatic circuit after said brake release module and before a brake module;
the method comprising the steps of:
   a) detecting either:
      1) that said engine is off, that said first air brake pressure sensor and said second air brake pressure sensor detect high air pressure signifying that the braking system is disengaged and detects said first condition indicative of said driver leaving said vehicle; or
      2) that said engine is on, that said gearbox is in neutral state, that said first air brake pressure sensor and said second air brake pressure sensor detect high air pressure signifying that the braking system is disengaged and detects said first condition indicative of said driver leaving said vehicle; or
      3) that said engine is on, that said gearbox is in neutral state, that said first air brake pressure sensor detects low pressure and that said second air brake pressure sensor detects an increase in air pressure signifying that the braking system is disengaged;
   b) engaging a braking system if the at least one of conditions 1), 2) and 3) are detected.

### Brief Description Of The Drawings

For a better understanding of the invention, and to show how example embodiments may be carried into effect, reference will now be made to the accompanying drawing in which:
Figure 1 shows a decision tree which illustrates the function of the device, system, vehicle and method of the present invention.
Figure 2 is a schematic diagram of a device of the first aspect of the present invention.
Figure 3 is a schematic diagram of a system of the second aspect of the present invention.
Figure 4 is a perspective view of a vehicle of the third aspect of the present invention.

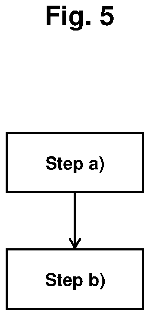

Figure 5 is a flow diagram representing the method of the fourth aspect of the present invention.

### Detailed Description Of The Example Embodiments

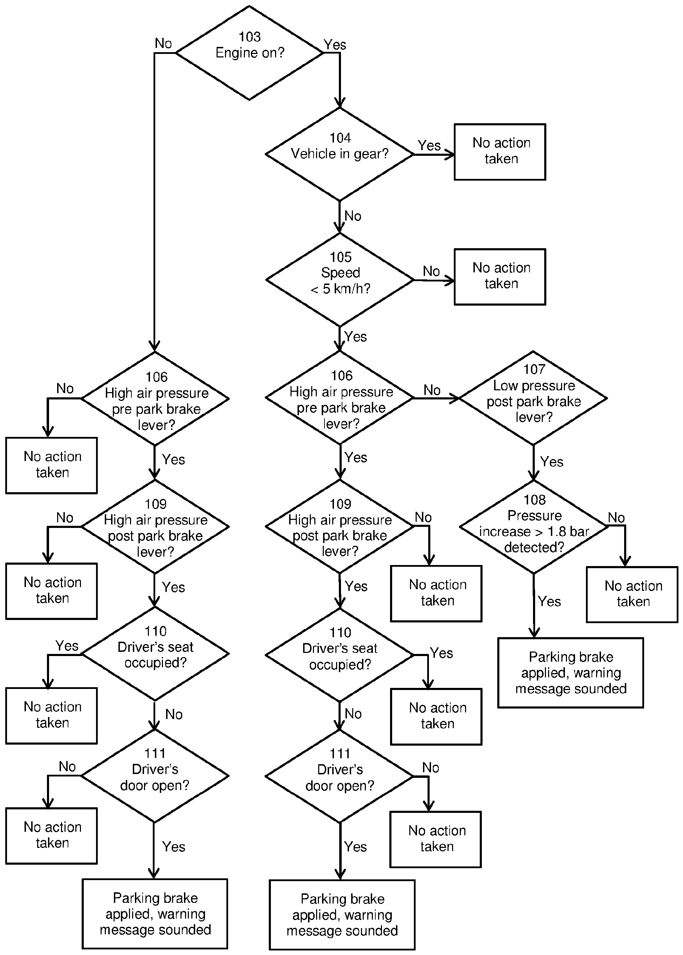

Figure 1 shows a decision tree which illustrates the function of the device, system, vehicle and method of the present invention. This decision tree is implemented by an appropriate arrangement of electronic circuitry in a control module of the device, system or vehicle. A skilled person with knowledge of the decision tree of Figure 1 would be able to implement this decision tree using known electronic components and arrangements. Each decision (enclosed in a diamond shape in Figure 1) is made by a control module of the device using electronic sensor inputs and the illustrated combination of YES and NO answers produces either a decision by the device to take no action (outcome 101) or a decision to apply a parking brake in the vehicle and sound a warning message (outcome 102).

The decision process is carried out by the device or method of the present invention as follows when the device or system is fitted to a vehicle with an engine, a gear system, an air brake system arranged as a parking brake, a driver seat sensor, a door sensor and an electronic control system which uses a controller area network (also known as a CAN bus) protocol. The air brake system comprises a park brake lever for controlling the engaged or disengaged state of the air brake system, in normal operation.

First the device decides whether the engine is on (running) or not (103), for example by using a signal input from the vehicle's CAN bus. If the engine is on (running) the device decides whether the vehicle is in gear (104), for example using a signal input from the vehicle's CAN bus. If the vehicle is determined to be in gear then the device produces outcome (101) of taking no action.

If the vehicle is not in gear then the device decides whether the speed of the vehicle is less than 5 km/h (105), for example using a signal input from the vehicle's CAN bus. If the speed of the vehicle is not less than 5 km/h then the device produces outcome (101) of taking no action.

If the speed of the vehicle is less than 5 km/h then the device decides whether high pressure is present in the air brake system before the park brake lever (106), for example using a first air brake pressure sensor arranged in a pneumatic circuit of the parking brake system before the parking brake lever.

If high air pressure is not present in the air brake system before the park brake lever, the device decides whether there is low air pressure present in the air brake system after the park brake lever (107), for example using a second air brake pressure sensor arranged in a pneumatic circuit of the parking brake system after the parking brake lever.

If low air pressure is present in the air brake system after the park brake lever, the device decides whether there is a subsequent increase in air pressure in the air brake system after the park brake lever (108), for example using the same second air brake pressure sensor arranged in a pneumatic circuit of the parking brake system after the parking brake lever and before the brake module (203). If there is no increase in air pressure in the air brake system after the park brake lever then the device produces outcome (101) of taking no action.

If an increase in air pressure over 1.8 bar in the air brake system after the park brake lever is detected (effectively meaning that the parking brake is set to off) the device produces outcome (102) of applying the parking brake and sounding the warning message.

If high pressure is present in the air brake system before the park brake lever (see 106), the device decides whether high pressure is present in the air brake system after the park brake lever (109), for example using the second air brake pressure sensor arranged in a pneumatic circuit of the parking brake system after the parking brake lever.

If high pressure is not present in the air brake system after the park brake lever (therefore signifying that the parking brake is set to on), the device produces outcome (101) of taking no action.

If high pressure is present in the air brake system after the park brake lever (effectively meaning that the parking brake is set to off), the device decides whether the driver's seat is occupied (110), for example using a seat sensor fitted to the mounting of the driver's seat. The occupancy or vacancy of the driver's seat is an example of a condition indicative of a driver leaving the vehicle. If the driver's seat is occupied then the device produces outcome (101) of taking no action.

If the driver's seat is not occupied then the device decides whether the driver's door is open (111). The opening of a driver's door is an example of a condition indicative of a driver leaving the vehicle. If the driver's door is not open then the device produces outcome (101) of taking no action.

If the driver's door is open then the device produces outcome (102) of applying the parking brake and sounding the warning message. The device achieves this by activating the brake module which comprises a pressure dumping solenoid valve fitted to the pneumatic circuit of the parking brake system. Activation of the brake module causes the solenoid valve to open which depressurises the parking system and therefore causes the parking brake to be applied (102), for example by the action of a spring biasing a brake pad against a brake drum, the brake pad being previously held off the brake drum by the air pressure in the parking brake system. The device sounds the warning message through an alarm module comprising a speaker connected to the device, for example an audible message stating "Please apply parking brake and press reset".

If in the first step (103) the device determines that the engine is not on (not running) then the device goes on to decide whether high pressure is present in the air brake system before the park brake lever (112), for example using a first air brake pressure sensor arranged in a pneumatic circuit of the parking brake system before the parking brake lever, missing out the decision of whether the vehicle is in gear (104). This is because when the engine is not running the vehicle may be liable to move unintentionally even if the vehicle is in gear.

If high pressure is not present in the air brake system before the park brake lever, the device produces outcome (101) of taking no action.

If high pressure is present in the air brake system before the park brake lever, the device decides whether high pressure is present in the air brake system after the park brake lever (113), for example using a second air brake pressure sensor arranged in a pneumatic circuit of the parking brake system after the parking brake lever.

If high pressure is not present in the air brake system after the park brake lever, the device produces outcome (101) of taking no action.

If high pressure is present in the air brake system after the park brake lever (effectively meaning that the parking brake is set to off), the device decides on whether the driver's seat is occupied (110) and whether the driver's door is open (111) with the same outcomes being produced as described above.

The decision tree of Figure 1 ensures that the most common circumstances where a driver leaves a vehicle without engaging a parking brake are detected by detecting the status of the driver's seat and driver's door. The device of the present invention then applies the parking brake if the device detects that the parking brake is not engaged and either the vehicle's engine is running but the vehicle is not in gear (the gearbox is in neutral state) or that the vehicle's engine is not running. Only applying the brake in these circumstances avoids the unnecessary activation of the system, for example when the vehicle's engine is running and is in gear or when the driver opens the door but does not leave the driver's seat.

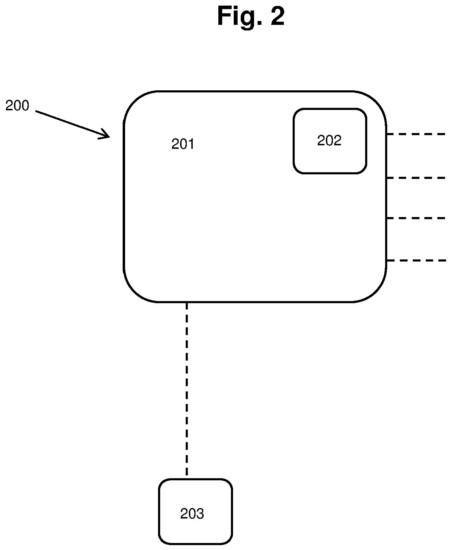

Figure 2 shows device (200) adapted to carry out the decision tree of Figure 1 by the arrangement of appropriate electronic circuitry. Device (200) comprises control module (201) which comprises CAN bus interface (202) for sending and receiving signals to and from a vehicle's electronic control system. Device (200) comprises brake module (203) connected to the control module (201) as shown by the hashed line. The bake module (203) comprises a pressure dumping solenoid valve, for example a 1/4 inch BSP, 3-port, NO, 3/2, 1 exhaust, 10 bar pressure rated solenoid dump valve, for fitting to a pneumatic circuit of a parking brake system in order to perform the function described above in relation to the outcome of applying the parking brake (102).

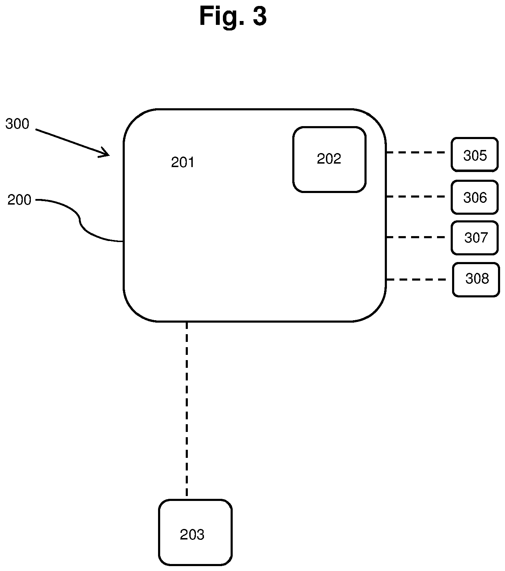

Figure 3 shows a system (300) adapted to carry out the decision tree of Figure 1 by the arrangement of the appropriate electronic circuitry and sensor inputs. System (300) comprises a device (200) as shown in Figure 2 and as described above. The device (200) comprises a CAN bus interface (202) for receiving signals from a vehicle's electronic control system regarding gearbox status, engine status, vehicle speed and door status (open or closed). The system (300) comprises a seat sensor (305), a pre-brake lever pressure sensor (306), a post-brake lever pressure sensor (307) and a brake lever sensor (308) each connected to the control module (201) as represented by the hashed lines. The CAN bus interface (202) and the sensors (305-308) provide the necessary inputs for the control module to carry out the decision tree of Figure 1. Seat sensor (305) is an NO (normally open) type pressure switch with a diffuser. Pre-brake lever pressure sensor (306) is a Fox F4/M2 adjustable (1-12 bar), 1/4 inch BSP, SPCO electromechanical pressure switch calibrated to 3 bar and configured to be NC (normally closed). Post-brake lever pressure sensor (307) is a Fox F4/M2 adjustable (1-12 bar), 1/4 inch BSP, SPCO electromechanical pressure switch calibrated to 1.8 bar and configured to be NO.

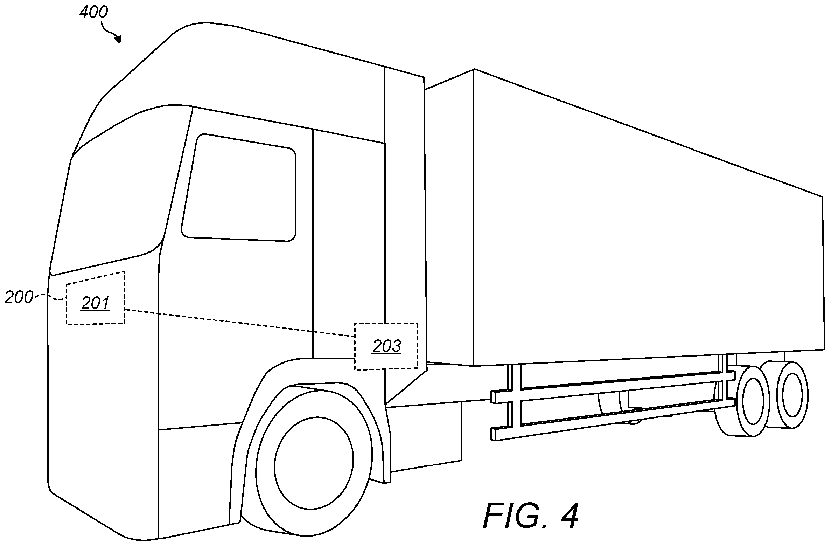

Figure 4 shows vehicle (400) fitted with device (200). The vehicle (400) is a heavy goods vehicle comprising an air brake system and an electronic control system using a CAN bus protocol. The vehicle's electronic control system provides CAN bus signals regarding engine status, gearbox status, vehicle speed and driver door opening. The vehicle is fitted with device (200) which uses CAN bus interface (202) to receive signals from the vehicle regarding engine status, gearbox status, vehicle speed and driver door opening.

Brake module (203) as described above in relation to Figure 2 is fitted to the pneumatic circuit of the vehicle's air brake system between a park brake lever and an air control shuttle valve which provides air pressure to the park brake actuators. The bake module comprises a solenoid dump valve arranged to depressurise the pneumatic circuit when activated by the control module.

The pneumatic circuit is also fitted with a first air brake electromechanical pressure switch (pre-brake lever pressure sensor 306) placed in the pneumatic circuit before the brake release lever (i.e. in the supply line) and a second air brake electromechanical pressure switch (post-brake lever pressure sensor 307) placed in the pneumatic circuit after the brake release lever and before the brake module. The first air brake electromechanical pressure switch is calibrated to provide a positive signal if the air pressure is higher than 3 bar. The second air brake electromechanical pressure switch is calibrated to provide a positive signal if the air pressure is higher than 1.8 bar.

The device comprises a reset button/switch. The reset button/switch must be activated by manual input from a user (for example a driver) and the vehicle's parking brake must be engaged using the vehicle's standard controls, to reset the device. By reset we mean the device is restored to its previous condition after an emergency application of said braking system (a condition where the device is active and able to engage a braking system in said vehicle when the brake module receives said activating signal). Alternatively or additionally, the device may also be reset when the gearbox of the vehicle is no longer in a neutral state (i.e. the gearbox is in a drive or reverse state).

The vehicle (400) was also fitted with a seat sensor (305) which is a pressure switch fitted between the seat base and the seat's cushion squab.

In tests to simulate common roll-away circumstances, the vehicle (400) was successfully prevented from moving without the driver present by the device (200) engaging the parking brake and sounding the warning message. Also, the device (200) successfully prevented the vehicle from moving by engaging the parking brake and sounding the warning message when the engine was on, the gearbox was in neutral, the park brake lever was off and an initially low pressure in the air brake system increased to above 1.8 bar due to the power to the vehicle's compressor provided by the engine. As discussed above, any further increase in pressure would have provided a pressure sufficient to disengage the air brake system and allow the vehicle to move, risking an accident.

The example embodiments described above may reduce the risk of a vehicle moving without the driver being present and causing serious harm to persons or property, by engaging a braking system if certain conditions indicative of a driver leaving the vehicle without engaging a braking system are detected. The device, system, vehicle and method of the example embodiments identify when the engine status, gear status and parking brake system status are such that the vehicle is at risk of moving uncontrollably if a driver exits the vehicle and can therefore allow the operation of a braking system to prevent the vehicle moving. The device, system, vehicle and method of the example embodiments can detect conditions indicative of a driver leaving the vehicle, for example using a combination of sensor inputs from a driver's seat sensor and a driver's door sensor, and activate a braking system when it is highly likely that a driver has left the vehicle. Using such a combination of sensor inputs can therefore avoid accidental or unnecessary activation of the braking system.

It is expected that the rate of fatal injuries caused by a driver of a vehicle with a parking brake exiting the vehicle without engaging the parking brake will decrease significantly if the device, system, vehicle and/or method of the example embodiments are widely adopted/used, in particular by operators and/or manufacturers of large commercial vehicles.

The present invention provides a vehicle safety device (200) for preventing an unoccupied vehicle moving uncontrollably. The device comprises a control module (201) and a brake module (203). The device (200) is configured to detect when a driver leaves said vehicle. The device (200) is also configured to activate, through the brake module (203), a braking system when the device detects that said driver has left the vehicle. The device may improve the safety of a vehicle in which it is fitted. A system (300) comprising the device (200) and a vehicle (400) comprising the system (300) are also described. A method of preventing an unoccupied vehicle moving is also described. The device, system, vehicle and method are particularly useful for preventing accidents in large commercial vehicles caused by a driver leaving the vehicle without engaging a parking brake.

## Claims

1. A device (200) for preventing a vehicle moving without a driver present in said vehicle, the device comprising a control module (201) and a brake module (203);
wherein the control module is adapted to:
receive a signal from a first driver sensor (305) in said vehicle to detect a first condition indicative of said driver leaving said vehicle;
receive a signal from a brake sensor (308) in said vehicle to detect an engaged or disengaged state of a parking brake system in said vehicle;
receive a signal from a speed sensor (202) to detect the speed of said vehicle;
and wherein the control module is adapted to send an activating signal to the brake module when the control module:
detects said first condition indicative of said driver leaving said vehicle;
detects that the braking system is disengaged; and
detects a vehicle speed of less than 10 km/h;
wherein the brake module is adapted to engage a braking system in said vehicle when the brake module receives said activating signal;
wherein the device comprises a reset button or switch to restore the device to its previous condition after an emergency application of said braking system, and wherein the reset button or switch deactivates the brake module so the brake module no longer engages said braking system.

2. The device according to claim 1, wherein said first condition indicative of said driver leaving said vehicle is the absence of said driver from a driver's seat in said vehicle; or wherein said first condition indicative of said driver leaving said vehicle is opening of a door of said vehicle.

3. The device according to any preceding claim, wherein the control module is adapted to receive a signal from a second driver sensor in said vehicle to detect a second condition indicative of said driver leaving said vehicle; and adapted to send said activating signal to the brake module when the control module detects said first and/or second conditions indicative of said driver leaving said vehicle.

4. The device according to any preceding claim, wherein the braking system which the control module is adapted to detect the engaged or disengaged state of is an air brake system.

5. The device according to any preceding claim, wherein the braking system which the brake module is adapted to engage is the same braking system which the control module is adapted to detect the engaged or disengaged state of.

6. The device according to any preceding claim, wherein the braking system which the brake module is adapted to engage is an air brake system; and wherein the brake module is adapted to engage the air brake system by depressurising the air brake system.

7. The device according to any preceding claim, wherein the control module is adapted to receive a signal from a gearbox sensor in said vehicle to detect a neutral or drive state of said gearbox; and wherein the control module is adapted to send said activating signal to the brake module when the control module detects that said gearbox is in neutral state.

8. The device according to any preceding claim, wherein the control module is adapted to send a signal to an alarm module to produce an audible warning when the brake module engages the braking system in said vehicle.

9. The device according to any preceding claim, wherein the device is adapted to communicate with an electronic control system in said vehicle to receive said signals from said first driver sensor, said brake sensor, said speed sensor, optionally said second driver sensor and optionally said gearbox sensor connected to said electronic control system.

10. The device according to claim 1, wherein the control module is adapted to:
receive said signal from said brake sensor in said vehicle to detect an engaged or disengaged state of a braking system in said vehicle;
receive a signal from an engine sensor to detect an on or off state of said engine;
receive a signal from a gearbox sensor in said vehicle to detect a neutral or drive state of said gearbox;
receive said signal from said speed sensor to detect the speed of said vehicle; and
send said activating signal to the brake module when the control module detects either:
a) that said engine is off, that said braking system is disengaged and detects said first condition indicative of said driver leaving said vehicle; or
b) that said engine is on, that said gearbox is in neutral state, that said vehicle speed is less than 10 km/h, that said braking system is disengaged and detects said first condition indicative of said driver leaving said vehicle;
wherein the brake module is adapted to engage said braking system in said vehicle when the brake module receives said activating signal.

11. The device according to claim 1, wherein said vehicle comprises an air brake system and said air brake system comprising a pneumatic circuit; a brake release module; and an air brake sensor system;
said air brake sensor system comprising a first air brake pressure sensor (306), placed in said pneumatic circuit before said brake release module; and a second air brake pressure sensor (307), placed in said pneumatic circuit after said brake release module and before the brake module;
wherein the control module is also adapted to:
receive a signal from said air brake sensor system to detect an engaged or disengaged state of a braking system in said vehicle;
receive a signal from a gearbox sensor (202) in said vehicle to detect a neutral or drive state of said gearbox;
receive a signal from an engine sensor (202) to detect an on or off state of said engine;
and wherein the control module is adapted to also send said activating signal to the brake module when the control module detects that:
said engine is on;
said gearbox is in neutral state;
said first air brake pressure sensor detects low pressure; and
said second air brake pressure sensor detects an increase in air pressure signifying that the braking system is disengaged.

12. A system (300) for preventing a vehicle moving without a driver present in said vehicle, the system comprising:
a device (200) according to any of claims 1 to 11;
at least a first driver sensor (305) adapted to detect a first condition indicative of said driver leaving said vehicle.

13. A vehicle comprising a system according to claim 12.

14. A method of preventing a vehicle moving when a driver is absent from the vehicle using a device according to any of claims 1 to 11, the method comprising the steps of:
a) detecting the absence of the driver in the vehicle using at least a first driver sensor (305);
a2) detecting an engaged or disengaged state of a parking brake system in the vehicle using a brake sensor (308);
a3) detecting the speed of the vehicle using a speed sensor; and
b) engaging a braking system (102) if the at least one driver sensor determines that the driver is absent from the vehicle and the brake sensor determines that the parking brake system is not engaged and the speed sensor determines that the vehicle speed is less than 10 km/h.

## Patentansprüche

1. Vorrichtung (200) zum Verhindern, dass sich ein Fahrzeug bewegt, ohne dass sich ein Fahrer im Fahrzeug befindet, wobei die Vorrichtung ein Steuermodul (201) und ein Bremsmodul (203) umfasst;
wobei das Steuermodul zu Folgendem angepasst ist:
Empfangen eines Signals von einem ersten Fahrersensor (305) im Fahrzeug, um einen ersten Zustand zu detektieren, der anzeigt, dass der Fahrer das Fahrzeug verlässt;
Empfangen eines Signals von einem Bremssensor (308) im Fahrzeug, um einen eingerückten oder ausgerückten Status des Parkbremssystems im Fahrzeug zu detektieren;
Empfangen eines Signals von einem Geschwindigkeitssensor (202), um die Geschwindigkeit des Fahrzeugs zu detektieren;
und wobei das Steuermodul angepasst ist, ein Aktivierungssignal an das Bremsmodul zu senden, wenn das Steuermodul:
den ersten Zustand detektiert, der anzeigt, dass der Fahrer das Fahrzeug verlässt;
detektiert, dass das Bremssystem ausgerückt ist; und eine Fahrzeuggeschwindigkeit von weniger als 10 km/h detektiert;
wobei das Bremsmodul angepasst ist, ein Bremssystem im Fahrzeug einzurücken, wenn das Bremsmodul das Aktivierungssignal empfängt;
wobei die Vorrichtung eine Rückstelltaste oder einen Rückstellschalter zum Wiederherstellen des vorherigen Zustands der Vorrichtung nach einer Notbetätigung des Bremssystems umfasst und wobei die Rückstelltaste oder der Rückstellschalter das Bremsmodul deaktiviert, derart, dass das Bremsmodul das Bremssystem nicht mehr einrückt.

2. Vorrichtung nach Anspruch 1, wobei der erste Zustand, der anzeigt, dass der Fahrer das Fahrzeug verlässt, die Abwesenheit des Fahrers auf einem Fahrersitz im Fahrzeug ist oder wobei der erste Zustand, der anzeigt, dass der Fahrer das Fahrzeug verlässt, das Öffnen einer Tür des Fahrzeugs ist.

3. Vorrichtung nach einem der vorhergehenden Ansprüche, wobei das Steuermodul angepasst ist, ein Signal von einem zweiten Fahrersensor im Fahrzeug zu empfangen, um einen zweiten Zustand zu detektieren, der anzeigt, dass der Fahrer das Fahrzeug verlässt; und angepasst ist, das Aktivierungssignal an das Bremsmodul zu senden, wenn das Steuermodul den ersten und/oder den zweiten Zustand, die anzeigen, dass der Fahrer das Fahrzeug verlässt, detektiert.

4. Vorrichtung nach einem der vorhergehenden Ansprüche, wobei das Bremssystem, dessen eingerückten oder ausgerückten Status das Steuermodul angepasst ist zu detektieren, ein Luftbremssystem ist.

5. Vorrichtung nach einem der vorhergehenden Ansprüche, wobei das Bremssystem, zu dessen Einrücken das Bremsmodul angepasst ist, dasselbe Bremssystem ist, dessen eingerückten oder ausgerückten Status das Steuermodul angepasst ist zu detektieren.

6. Vorrichtung nach einem der vorhergehenden Ansprüche, wobei das Bremssystem, zu dessen Einrücken das Bremsmodul angepasst ist, ein Luftbremssystem ist und wobei das Bremsmodul angepasst ist, das Luftbremssystem durch Druckentlasten des Luftbremssystems einzurücken.

7. Vorrichtung nach einem der vorhergehenden Ansprüche, wobei das Steuermodul angepasst ist, ein Signal von einem Getriebesensor im Fahrzeug zu empfangen, um einen neutralen oder einen Fahrstatus des Getriebes zu detektieren; und wobei das Steuermodul angepasst ist, das Aktivierungssignal an das Bremsmodul zu senden, wenn das Steuermodul detektiert, dass sich das Getriebe in einem neutralen Status befindet.

8. Vorrichtung nach einem der vorhergehenden Ansprüche, wobei das Steuermodul angepasst ist, ein Signal an ein Alarmmodul zu senden, um eine akustische Warnung zu produzieren, wenn das Bremsmodul das Bremssystem im Fahrzeug einrückt.

9. Vorrichtung nach einem der vorhergehenden Ansprüche, wobei die Vorrichtung angepasst ist, mit einem elektronischen Steuersystem im Fahrzeug zu kommunizieren, um die Signale vom ersten Fahrersensor, vom Bremssensor, vom Geschwindigkeitssensor, wahlweise vom zweiten Fahrersensor und wahlweise vom Getriebesensor, die mit dem elektronischen Steuersystem verbunden sind, zu empfangen.

10. Vorrichtung nach Anspruch 1, wobei das Steuermodul zu Folgendem angepasst ist:
Empfangen des Signals vom Bremssensor im Fahrzeug, um einen eingerückten oder ausgerückten Status eines Bremssystems im Fahrzeug zu detektieren;
Empfangen eines Signals von einem Motorsensor, um einen An- oder Auszustand des Motors zu detektieren;
Empfangen eines Signals von einem Getriebesensor im Fahrzeug, um einen neutralen oder einen Fahrstatus des Getriebes zu detektieren;
Empfangen des Signals vom Geschwindigkeitssensor, um die Geschwindigkeit des Fahrzeugs zu detektieren; und Senden des Aktivierungssignals an das Bremsmodul, wenn das Steuermodul eines von Folgendem detektiert:
a) dass der Motor aus ist, dass das Bremssystem ausgerückt ist, und den ersten Zustand detektiert, der anzeigt, dass der Fahrer das Fahrzeug verlässt; oder
b) dass der Motor an ist, dass sich das Getriebe in einem neutralen Status befindet, dass die Fahrzeuggeschwindigkeit weniger als 10 km/h beträgt, dass das Bremssystem ausgerückt ist, und den ersten Zustand detektiert, der anzeigt, dass der Fahrer das Fahrzeug verlässt;
wobei das Bremsmodul angepasst ist, das Bremssystem im Fahrzeug einzurücken, wenn das Bremsmodul das Aktivierungssignal empfängt.

11. Vorrichtung nach Anspruch 1, wobei das Fahrzeug ein Luftbremssystem umfasst und wobei das Luftbremssystem einen Pneumatikkreis; ein Bremsenlösemodul und ein Luftbremssensorsystem umfasst;
wobei das Luftbremssensorsystem einen ersten Luftbremsdrucksensor (306), der sich im Pneumatikkreis vor dem Bremsenlösemodul befindet; und einen zweiten Luftbremsdrucksensor (307), der sich im Pneumatikkreis hinter dem Bremsenlösemodul und vor dem Bremsmodul befindet, umfasst;
wobei das Steuermodul auch zu Folgendem angepasst ist:
Empfangen eines Signals vom Luftbremssensorsystem, um einen eingerückten oder ausgerückten Status eines Bremssystems im Fahrzeug zu detektieren;
Empfangen eines Signals von einem Getriebesensor (202) im Fahrzeug, um einen neutralen oder einen Fahrstatus des Getriebes zu detektieren;
Empfangen eines Signals von einem Motorsensor (202), um einen An- oder Auszustand des Motors zu detektieren;
und wobei das Steuermodul angepasst ist, das Aktivierungssignal auch an das Bremsmodul zu senden, wenn das Steuermodul detektiert, dass:
der Motor an ist;
das Getriebe sich im neutralen Status befindet;
der erste Luftbremsdrucksensor einen niedrigen Druck detektiert und
der zweite Luftbremsdrucksensor einen Anstieg des Luftdrucks detektiert, was bedeutet, dass das Bremssystem ausgerückt ist.

12. System (300) zum Verhindern, dass sich ein Fahrzeug bewegt, ohne dass sich ein Fahrer im Fahrzeug befindet, wobei das System Folgendes umfasst:
eine Vorrichtung (200) nach einem der Ansprüche 1 bis 11; mindestens einen ersten Fahrersensor (305), der angepasst ist, einen ersten Zustand zu detektieren, der anzeigt, dass der Fahrer das Fahrzeug verlässt.

13. Fahrzeug, das ein System nach Anspruch 12 umfasst.

14. Verfahren zum Verhindern, dass sich ein Fahrzeug bewegt, wenn kein Fahrer im Fahrzeug vorhanden ist, unter Verwendung einer Vorrichtung nach einem der Ansprüche 1 bis 11, wobei das Verfahren die folgenden Schritte umfasst:
a) Detektieren der Abwesenheit des Fahrers im Fahrzeug unter Verwendung von mindestens einem ersten Fahrersensor (305) ;
a2) Detektieren eines eingerückten oder ausgerückten Status eines Parkbremssystems im Fahrzeug unter Verwendung eines Bremssensors (308);
a3) Detektieren der Geschwindigkeit des Fahrzeugs unter Verwendung eines Geschwindigkeitssensors und
b) Einrücken eines Bremssystems (102), wenn mindestens ein Fahrersensor bestimmt, dass der Fahrer nicht im Fahrzeug anwesend ist, und der Bremssensor bestimmt, dass das Parkbremssystem nicht eingerückt ist, und der Geschwindigkeitssensor bestimmt, dass die Fahrzeuggeschwindigkeit weniger als 10 km/h beträgt.

## Revendications

1. Dispositif (200) pour empêcher un véhicule de se déplacer sans un conducteur présent dans ledit véhicule, le dispositif comprenant un module de commande (201) et un module de freinage (203) ;
dans lequel le module de commande est adapté pour :
recevoir un signal d'un premier capteur de conducteur (305) dans ledit véhicule pour détecter une première condition indiquant que ledit conducteur quitte ledit véhicule ;
recevoir un signal d'un capteur de freinage (308) dans ledit véhicule pour détecter un état enclenché ou désenclenché d'un système de freinage de stationnement dans ledit véhicule ;
recevoir un signal d'un capteur de vitesse (202) pour détecter la vitesse dudit véhicule ;
et dans lequel le module commande est adapté pour envoyer un signal d'activation au module de freinage lorsque le module de commande :
détecte ladite première condition indiquant que ledit conducteur quitte ledit véhicule ;
détecte que le système de freinage est désenclenché ; et
détecte une vitesse de véhicule inférieure à 10 km/h ;
dans lequel le module de freinage est adapté pour enclencher un système de freinage dans ledit véhicule lorsque le module de freinage reçoit ledit signal d'activation ;
le dispositif comprenant un bouton ou commutateur de réinitialisation pour rétablir le dispositif sur sa condition précédente après une application d'urgence dudit système de freinage, et dans lequel le bouton ou commutateur de réinitialisation désactive le module de freinage de sorte que le module de freinage n'enclenche plus ledit système de freinage.

2. Dispositif selon la revendication 1, dans lequel ladite première condition indiquant que ledit conducteur quitte ledit véhicule est l'absence dudit conducteur d'un siège conducteur dans ledit véhicule ; ou dans lequel ladite première condition indiquant que ledit conducteur quitte ledit véhicule est l'ouverture d'une porte dudit véhicule.

3. Dispositif selon l'une quelconque des revendications précédentes, dans lequel le module de commande est adapté pour recevoir un signal d'un deuxième capteur de conducteur dans ledit véhicule pour détecter une deuxième condition indiquant que ledit conducteur quitte ledit véhicule ; et adapté pour envoyer ledit signal d'activation au module de freinage lorsque le module de commande détecte lesdites première et/ou deuxième conditions indiquant que ledit conducteur quitte ledit véhicule.

4. Dispositif selon l'une quelconque des revendications précédentes, dans lequel le système de freinage dont le module de commande est adapté pour détecter l'état enclenché ou désenclenché est un système de freinage à air.

5. Dispositif selon l'une quelconque des revendications précédentes, dans lequel le système de freinage que le module de freinage est adapté pour enclencher est le même système de freinage que celui dont le module de commande est adapté pour détecter l'état enclenché ou désenclenché.

6. Dispositif selon l'une quelconque des revendications précédentes, dans lequel le système de freinage que le module de freinage est adapté pour enclencher est un système de freinage à air ; et dans lequel le module de freinage est adapté pour enclencher le système de freinage à air en dépressurisant le système de freinage à air.

7. Dispositif selon l'une quelconque des revendications précédentes, dans lequel le module de commande est adapté pour recevoir un signal d'un capteur de boîte de vitesses dans ledit véhicule pour détecter un état neutre ou d'entraînement de ladite boîte de vitesses ; et dans lequel le module de commande est adapté pour envoyer ledit signal d'activation au module de freinage lorsque le module de commande détecte que ladite boîte de vitesses est dans un état neutre.

8. Dispositif selon l'une quelconque des revendications précédentes, dans lequel le module de commande est adapté pour envoyer un signal à un module d'alarme pour produire un avertissement sonore lorsque le module de freinage enclenche le système de freinage dans ledit véhicule.

9. Dispositif selon l'une quelconque des revendications précédentes, le dispositif étant adapté pour communiquer avec un système de commande électronique dans ledit véhicule pour recevoir lesdits signaux dudit premier capteur de conducteur, dudit capteur de freinage, dudit capteur de vitesse, facultativement dudit deuxième capteur de conducteur et facultativement dudit capteur de boîte de vitesses connectés audit système de commande électronique.

10. Dispositif selon la revendication 1, dans lequel le module de commande est adapté pour :
recevoir ledit signal dudit capteur de freinage dans ledit véhicule pour détecter un état enclenché ou désenclenché d'un système de freinage dans ledit véhicule ;
recevoir un signal d'un capteur de moteur pour détecter un état de marche ou d'arrêt dudit moteur ;
recevoir un signal d'un capteur de boîte de vitesses dans ledit véhicule pour détecter un état neutre ou d'entraînement de ladite boîte de vitesses ;
recevoir ledit signal dudit capteur de vitesse pour détecter la vitesse dudit véhicule ; et
envoyer ledit signal d'activation au module de freinage lorsque le module de commande détecte soit :
a) que ledit moteur est à l'arrêt, que ledit système de freinage est désenclenché et détecte ladite première condition indiquant que ledit conducteur quitte ledit véhicule ; soit
b) que ledit moteur est en marche, que ladite boîte de vitesse est dans un état neutre, que ladite vitesse du véhicule est inférieure à 10 km/h, que ledit système de freinage est désenclenché et détecte ladite première condition indiquant que ledit conducteur quitte ledit véhicule ;
dans lequel le module de freinage est adapté pour enclencher ledit système de freinage dans ledit véhicule lorsque le module de freinage reçoit ledit signal d'activation.

11. Dispositif selon la revendication 1, dans lequel ledit véhicule comprend un système de freinage à air et ledit système de freinage à air comprenant un circuit pneumatique, un module de libération de freinage, et un système de capteur de freinage à air ;
ledit système de capteur de freinage à air comprenant un premier capteur de pression de freinage à air (306), placé dans ledit circuit pneumatique avant ledit module de libération de freinage ; et un deuxième capteur de pression de freinage à air (307), placé dans ledit circuit pneumatique après ledit module de libération de freinage et avant le module de freinage ;
dans lequel le module de commande est également adapté pour :
recevoir un signal dudit système de capteur de freinage à air pour détecter un état enclenché ou désenclenché d'un système de freinage dans ledit véhicule ;
recevoir un signal d'un capteur de boîte de vitesses (202) dans ledit véhicule pour détecter un état neutre ou d'entraînement de ladite boîte de vitesses ;
recevoir un signal d'un capteur de moteur (202) pour détecter un état de marche ou d'arrêt dudit moteur ;
et dans lequel le module de commande est adapté pour envoyer également ledit signal d'activation au module de freinage lorsque le module de commande détecte que :
ledit moteur est en marche ;
ladite boîte de vitesses est dans un état neutre ;
ledit premier capteur de pression de freinage à air détecte une faible pression ; et
ledit deuxième capteur de pression de freinage à air détecte une augmentation de la pression d'air signifiant que le système de freinage est désenclenché.

12. Système (300) pour empêcher un véhicule de se déplacer sans un conducteur présent dans ledit véhicule, le système comprenant :
un dispositif (200) selon l'une quelconque des revendications 1 à 11 ;
au moins un premier capteur de conducteur (305) adapté pour détecter une première condition indiquant que ledit conducteur quitte ledit véhicule.

13. Véhicule comprenant un système selon la revendication 12.

14. Procédé pour empêcher un véhicule de se déplacer lorsqu'un conducteur est absent du véhicule à l'aide d'un dispositif selon l'une quelconque des revendications 1 à 11, le procédé comprenant les étapes consistant à :
a) détecter l'absence du conducteur dans le véhicule à l'aide d'au moins un premier capteur de conducteur (305) ;
a2) détecter un état enclenché ou désenclenché d'un système de freinage de stationnement dans le véhicule à l'aide d'un capteur de freinage (308) ;
a3) détecter la vitesse du véhicule à l'aide d'un capteur de vitesse ; et
b) enclencher un système de freinage (102) si l'au moins un capteur de conducteur détermine que le conducteur est absent du véhicule et le capteur de freinage détermine que le système de freinage de stationnement n'est pas enclenché et le capteur de vitesse détermine que la vitesse du véhicule est inférieure à 10 km/h.
